(19) **Europäisches Patentamt**
**European Patent Office**
**Office européen des brevets**

(11) **EP 2 209 242 A1**

(12) **EUROPEAN PATENT APPLICATION**
published in accordance with Art. 153(4) EPC

(43) Date of publication:
**21.07.2010 Bulletin 2010/29**

(21) Application number: **08846498.7**

(22) Date of filing: **19.09.2008**

(51) Int Cl.:
***H04J 11/00*** *(2006.01)*    ***H04J 1/00*** *(2006.01)*

(86) International application number:
**PCT/JP2008/066943**

(87) International publication number:
**WO 2009/060668 (14.05.2009 Gazette 2009/20)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.11.2007 JP 2007288065**

(71) Applicant: **Sharp Kabushiki Kaisha Osaka-shi, Osaka 545-8522 (JP)**

(72) Inventors:
• **TSUBOI, Hidekazu**
  **Osaka-shi, Osaka 545-8522 (JP)**
• **UEMURA, Katsunari**
  **Osaka-shi, Osaka 545-8522 (JP)**

(74) Representative: **Müller - Hoffmann & Partner Patentanwälte**
**Innere Wiener Strasse 17**
**81667 München (DE)**

(54) **BASE STATION APPARATUS, MOBILE STATION APPARATUS, COMMUNICATION SYSTEM, AND CELL SEARCH METHOD**

(57) There are provided a base station apparatus, a mobile station apparatus, and a cell search method capable of reducing the circuit scale of the mobile station apparatus and a calculation amount by optimizing information distribution to a primary synchronization channel (P-SCH) and a secondary synchronization channel (S-SCH). The base station apparatus (2) transmits the P-SCH and the S-SCH as synchronization channels. The base station apparatus (2) is equipped with an SCH signal generation unit (29) that multiplies the S-SCH by a sequence according to a cell type of the base station apparatus (2).

FIG. 6

**Description**

TECHNICAL FIELD

The present invention relates to a base station apparatus and a mobile station apparatus applied to a multi-carrier communication system, and a communication system and a cell search method using multi-carrier.

BACKGROUND OF THE INVENTION

Currently, the EUTRA (Evolved Universal Terrestrial Radio Access) which aims to increase a communication speed by introducing, to the third generation frequency bandwidth, a part of technology which has been studied for the fourth generation has been studied by a standardization organization of 3GPP (3rd Generation Partnership Project) (Non-patent document 1).

In the EUTRA, an OFDMA (Orthogonal Frequency Division Multiplexing Access) system which has a tolerance against multi-path interference and is suitable for high-speed transmission has been determined to be employed as a communication system. Moreover, in the detailed specification about operations of a high-order layer such as data transfer control and resource management control of the EUTRA, a technology which achieves low delay and low overhead, and further has a structure as simple as possible is increasingly employed.

On the other hand, in a cellular mobile communication system, in order to perform radio communication between a mobile station apparatus and a base station apparatus, the mobile station apparatus needs to perform radio synchronization with the base station apparatus in advance in a cell or sector which is a communication area of the base station apparatus. Thus, the base station apparatus transmits a synchronization channel (Synchronization Channel, hereinafter referred to as the "SCH") consisting of a specified structure and the mobile station apparatus detects the SCH transmitted by the base station apparatus to take synchronization with the base station apparatus. Note that, in a W-CDMA (Wideband-Code Division Multiple Access) system which is one of third generation communication systems, a P-SCH (Primary SCH, primary synchronization channel) and an S-SCH (Secondary SCH, secondary synchronization channel) are transmitted at the same timing as the SCH.

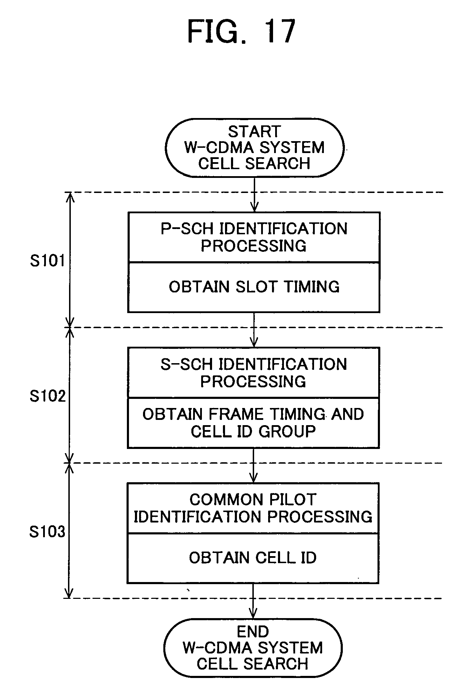

Here, processing in which the mobile station apparatus takes radio synchronization with the base station apparatus and further searches a cell controlled by the base station apparatus, that is, a cell search will be described with reference to a flowchart of Fig. 17.

Note that, the cell search is classified into an initial cell search and a peripheral cell search. The initial cell search is a cell search which is performed by the mobile station apparatus, after whose power is turned on, to search a cell of a best quality and to be located in the cell. In addition, the peripheral cell search is a cell search which is performed by the mobile station apparatus after the initial cell search to search a candidate cell of a handover destination.

When a user turns on power of the mobile station apparatus, the mobile station apparatus receives the P-SCH and the S-SCH transmitted by the base station apparatus and takes a correlation between the received P-SCH and S-SCH (hereinafter referred to as the "received signals") and a replica signal of the P-SCH to thereby take slot synchronization (step S101).

Then, a correlation is taken between the replica signal of the S-SCH and the received signals, frame synchronization is taken by the obtained S-SCH transmission pattern, and a cell ID (Identification: identification information) group for identifying the base station apparatus is specified (step S102).

Further, in order to specify cell ID of the base station apparatus from the cell ID group, a quality of a common pilot channel (Common Pilot Channel, hereinafter referred to as the "CPICH") is measured to detect the corresponding (communicating) cell ID from the CPICH of a best quality (step S103) (refer to "2-2-2. Cell Search" on pp. 35-45 of Non-patent document 1).

Such a series of control, that is, three-staged step control that the mobile station apparatus takes radio synchronization with the base station apparatus and the cell ID of the base station apparatus is further specified is called a cell search procedure.

Note that, it is known that the EUTRA is multi-carrier communication using the OFDMA system and therefore uses the synchronization channel (SCH), but needs channel mapping and cell search control different from the cell search of the above-described W-CDMA system. For example, the cell search procedure is able to be completed by two steps differently from the W-CDMA.

On the other hand, separately from the above-described normal base station apparatus, there is a base station apparatus called a Home NodeB which has low transmission power and has a small cell radius (hereinafter referred to as the HNB), capable of storing only several mobile station apparatuses.

In addition, in a cell search executed by the mobile station apparatus for the above-described HNB, a method using the P-SCH having a different sequence from that of the above-described P-SCH is proposed (Non-patent document 2).

Moreover, there is a base station (hereinafter referred to as the "dMBMS base station") which does not perform transmission to individual mobile station apparatuses but performs only multicast transmission and broadcast transmission.

In addition, in a cell search executed by the mobile station apparatus for the above-described dMBMS base station, similarly to the above-described HNB, a method using the P-SCH having a different sequence from that of the above-described P-SCH is proposed (Non-patent document 3).

[Non-patent document 1] Keiji TACHIKAWA, "W-CDMA mobile communication system", ISBN4-621-04894-5, originally printed on June 25, 2001, MARUZEN CO., Ltd.,

[Non-patent document 2] NTT DoCoMo, "Cell ID Assignment for Home Node B", R1-073684, 3GPP TSG RAN WG1#50, Athens, Greece, August 20-24, 2007

[Non-patent document 3] Nokia, "Transmission of P-BCH, P-SCH and S-SCH on dedicated MBMS carrier", R1-073668, 3GPP TSG RAN WG1#50, Athens, Greece, August 20-24, 2007

DISCLOSURE OF THE INVENTION

PROBLEMS TO BE SOLVED BY THE INVENTION

However, when the mobile station apparatus uses the P-SCH having a different sequence from that of the above-described P-SCH in order to execute a cell search not only for the normal base station apparatus but for the HNB and the dMBMS base station, that is, when the P-SCH is increased as necessary, the mobile station apparatus needs to take a correlation with many P-SCH sequences at the time of executing the cell search, in particular, taking time synchronization.

As a result, there poses a problem that the circuit scale of the mobile station apparatus is increased and a calculation amount is increased.

The present invention is made in view of such circumstances and aims to provide a base station apparatus, a mobile station apparatus, a communication system, and a cell search method capable of seeking decrease in the circuit scale and the calculation amount of the mobile station apparatus by optimizing distribution of information to the P-SCH and the S-SCH.

A first technical means of the present invention provides base station apparatuses in a multi-carrier communication system comprising one or a plurality of mobile station apparatus and a plurality of base station apparatuses, wherein a primary synchronization channel (P-SCH) and a secondary synchronization channel (S-SCH) are transmitted as synchronization channels by the base station apparatuses, a base station apparatus in a specific cell among the plurality of base station apparatuses is provided with an SCH signal generating portion which multiplies the secondary synchronization channel by a sequence corresponding to a type of the cell.

A second technical means provides the first technical means wherein the base station apparatuses, wherein the SCH signal generating portion which multiplies a sequence corresponding to a type of the cell is provided with an identifying code generating portion which generates a plus-1 sequence and a minus-1 sequence multiplied by an S-SCH signal.

A third technical means provides the first technical means wherein the base station apparatuses, wherein the SCH signal generating portion which multiplies a sequence corresponding to a type of the cell is provided with a P-SCH-compliant scrambling code generating portion which generates scrambling codes associated with a type of a cell.

A fourth technical means provides the third technical means wherein the base station apparatuses, wherein a scrambling code associated with a type of a certain cell among the scrambling codes associated with a type of the cell is a code obtained by multiplying a scrambling code associated with a type of a different cell by a binary code.

A fifth technical means provides a mobile station apparatus which receives an S-SCH signal multiplied by a plus-1 sequence or a minus-1 sequence for identification of a type of a cell, wherein an S-SCH correlation portion which calculates a correlation value of the received S-SCH signal and an S-SCH replica held in its own station and an S-SCH judging portion which judges identification of a type of a cell with plus and minus signs of the calculated correlation value are included.

A sixth technical means provides a mobile station apparatus which performs identification of a type of a cell using a scrambling code multiplied by an S-SCH signal, wherein

an S-SCH correlation portion which obtains a normal correlation value and a correlation value inverting plus and minus at a specific point when calculating a correlation value of the received S-SCH signal and an S-SCH replica held in its own station and an S-SCH judging portion which judges identification of a type of a cell by the calculated two kinds of correlation values are included.

A seventh technical means provides a communication system comprising the base station apparatuses as defined in any one of the first through the forth technical means and the mobile station apparatus as defined in the fifth or the sixth technical means.

An eighth technical means provides a cell search method in a mobile station apparatus which executes a step of receiving an S-SCH signal multiplied by a plus-1 sequence or a minus-1 sequence for identification of a type of a cell, comprising:

a step of calculating a correlation value of the received S-SCH signal and an S-SCH replica held in its own station; and a step of judging identification of a type of a cell with plus and minus signs of the calculated correlation value are included.

A ninth technical means provides a cell search method in a mobile station apparatus which executes a step of performing identification of a type of a cell using a scrambling code multiplied by an S-SCH signal, wherein a step of obtaining a normal correlation value and a correlation value inverting plus and minus at a specific point when calculating a correlation value of the received S-SCH signal and an S-SCH replica held in its own station and a step of judging identification of a type of a cell by the calculated two kinds of correlation values are included.

EFFECTS OF THE INVENTION

According to the present invention, it is possible to decrease a calculation amount in a channel search. Moreover, by decreasing the calculation amount, it is possible to simplify a circuit of a mobile station apparatus and to suppress consumed power due to reduction in a time taking for correlation processing.

BRIEF DESCRIPTION OF DRAWINGS

[Fig. 1] Fig. 1 is a diagram showing a radio resource divided by a frequency area and a time area in the EUTRA.
[Fig. 2] Fig. 2 is a diagram showing a position of an SCH in a frame in the EUTRA.
[Fig. 3] Fig. 3 is a diagram showing an example of a relation between a base station and a cell.
[Fig. 4] Fig. 4 is a diagram showing an example of a structure of an S-SCH in the EUTRA.
[Fig. 5] Fig. 5 is a block diagram showing an example of a mobile station apparatus in a first embodiment.
[Fig. 6] Fig. 6 is a block diagram showing an example of a base station apparatus in the first embodiment.
[Fig. 7] Fig. 7 is a diagram showing an example of a structure of an S-SCH in the first and second embodiments.
[Fig. 8] Fig. 8 is a block diagram showing a detail of an SCH signal generating portion in the first embodiment.
[Fig. 9] Fig. 9 is a block diagram showing a detail of a cell search portion in the first embodiment.
[Fig. 10] Fig. 10 is a flowchart showing an example of S-SCH reception processing in the first embodiment.
[Fig. 11] Fig. 11 is a block diagram showing a detail of an SCH signal generating portion in the second embodiment.
[Fig. 12] Fig. 12 is a diagram showing an example of a generating circuit in the second embodiment.
[Fig. 13] Fig. 13 is a diagram showing an example of a correlation wave detector in the second embodiment.
[Fig. 14] Fig. 14 is a diagram showing another example of the correlation wave detector in the second embodiment.
[Fig. 15] Fig. 15 is a block diagram showing a detail of a cell search portion in the second embodiment.
[Fig. 16] Fig. 16 is a flowchart showing an example of S-SCH reception processing in the second embodiment.
[Fig. 17] Fig. 17 is a flowchart showing a conventional three-staged cell search procedure.

EXPLANATIONS OF REFERENCE NUMERALS

1...mobile station apparatus; 10...receiving portion; 11...control portion; 12...demodulating portion; 13...control signal processing portion; 14...data processing portion; 15...downlink synchronization adjusting portion; 16, 16'...cell search portion; 17...cell information processing portion; 18...code portion; 19...modulating portion; 20...transmitting portion; 21...high-order layer; 2...base station apparatus; 22...receiving portion; 23...demodulating portion; 24...control portion; 25...data processing portion; 26...control signal processing portion; 27...code portion; 28...modulating portion; 29, 29'...SCH signal generating portion; 30...transmitting portion; 31...high-order layer; 50, 90...P-SCH generating portion; 51, 91...S-SCH generating portion; 52, 92...P-SCH-compliant scrambling code generating portion; 53...identifying code generating portion; 54...S-SCH mapping portion; 60, 100...channel switching portion; 61, 101...P-SCH correlation portion; 62, 102...P-SCH replica signal selecting portion; 63, 103...P-SCH judging portion; 64, 104...P-SCH signal holding portion; 65, 105...P-SCH-compliant scrambling code selecting portion; 66, 106...S-SCH correlation portion; 67, 107...S-SCH replica signal selecting portion; 68, 108...S-SCH judging portion; 69, 109...S-SCH signal holding portion; 70, 110...propagation path compensating portion; 93...S-SCH mapping portion; 100...channel switching portion; 2101, 2201...S/P; 2102...accumulator; 2103...multiplying portion; 2202...first accumulator; 2203...second accumulator; 2204...third accumulator; 2205...subtractor; and 2206...multiplying portion

PREFERRED EMBODIMENTS OF THE INVENTION

Next, description will be given for embodiments of the present invention with reference to figures. First, a basic technology of the present invention will be described.

(Physical channel)

Physical channels commonly used in the embodiments include the followings.
Physical channels are classified into a data channel and a control channel. The control channel includes not only a synchronization channel (SCH) arranged in a radio frame, which will be described below, but a broadcast information channel, a random access channel, a downlink reference signal, an uplink reference signal, a downlink shared control channel, and an uplink shared control channel. Detailed description for these physical channels will be omitted because of not affecting the present invention.

(Radio frame)

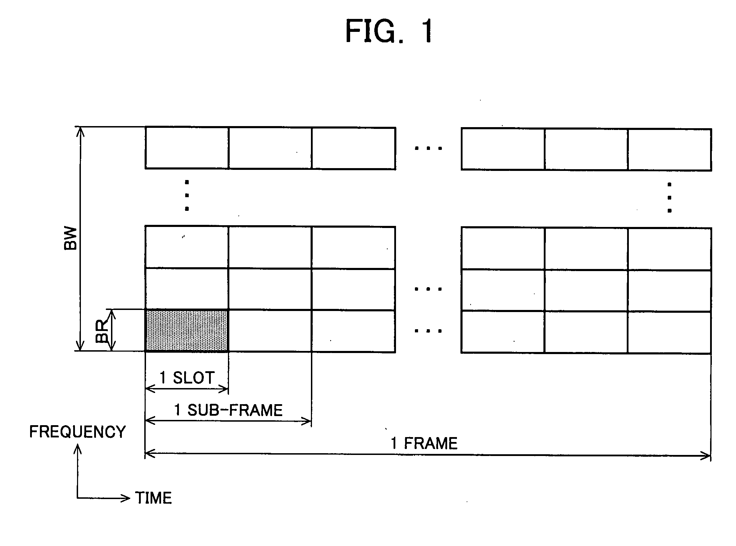

Fig. 1 is a diagram showing an example of a structure of a radio frame in the EUTRA where the above-described synchronization channel and the like are arranged. In Fig. 1, a time axis is taken along the horizontal axis, and a frequency axis is taken along the vertical axis. The radio frame consists of a fixed frequency area (BR) in which the frequency axis consists of an assembly of a plurality of sub-carriers and an area consisting of a fixed transmission time interval (slot) as a single unit (refer to Non-patent document 4).
Moreover, the transmission time interval consisting of an integral multiple of one slot is called a sub-frame. Further, one collecting a plurality of sub-frames is called a frame. Fig. 1 shows the case where one sub-frame consists of two slots. An area divided by the fixed frequency area (BR) and one slot long is called a resource block. The BW in Fig. 1 shows a system bandwidth and the BR shows a resource block bandwidth.

(Synchronization channel)

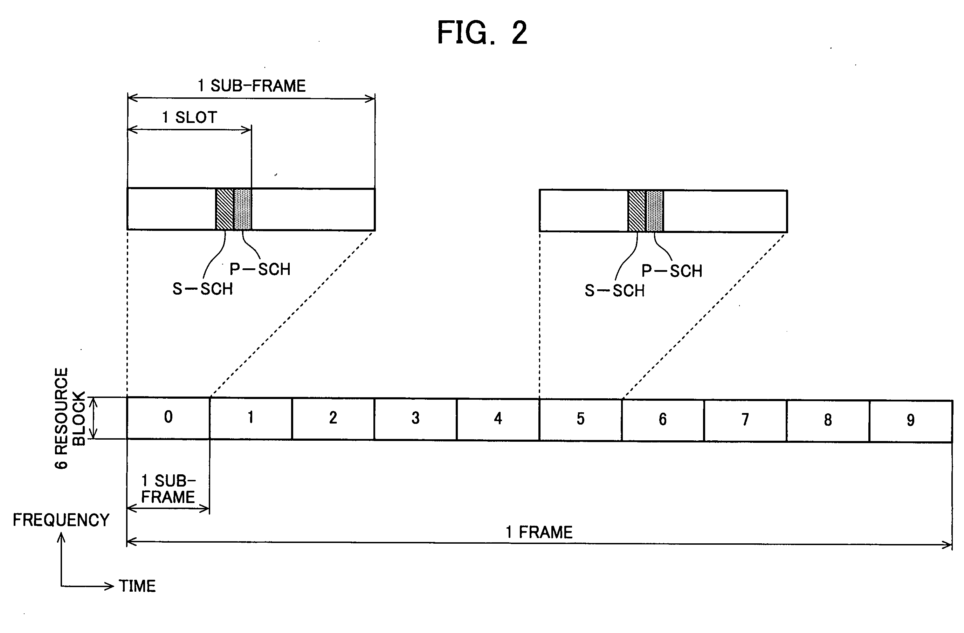

Fig. 2 is a diagram showing a position of the above-described synchronization channel, that is, the SCH (P-SCH and S-SCH) in the above-described frame in the EUTRA. The P-SCH is arranged in final symbols of head slots with sub-frame numbers of #0 and #5 in the 6 resource block (used 72 sub-carrier) in the center of the system bandwidth. The S-SCH is arranged in the symbols directly before the P-SCH. Note that, in Non-patent document 4, although an SCH is described as a synchronization signal, meaning of which is the same.
Moreover, in a normal cell, three sequences are prepared as the P-SCH and a different P-SCH sequence shows information of a part of cell ID (e.g., 3 types). In addition, the S-SCH also shows a part of cell ID (e.g., 170 types) similarly and therefore needs identification of a plurality of different signals, and further may show information specific to the base station apparatus such as frame timing information (e.g., 2 types). When a part of cell ID and frame timing information are shown in the S-SCH, for example, 170 x 2 = 340 types of identification are necessary.

(P-SCH)

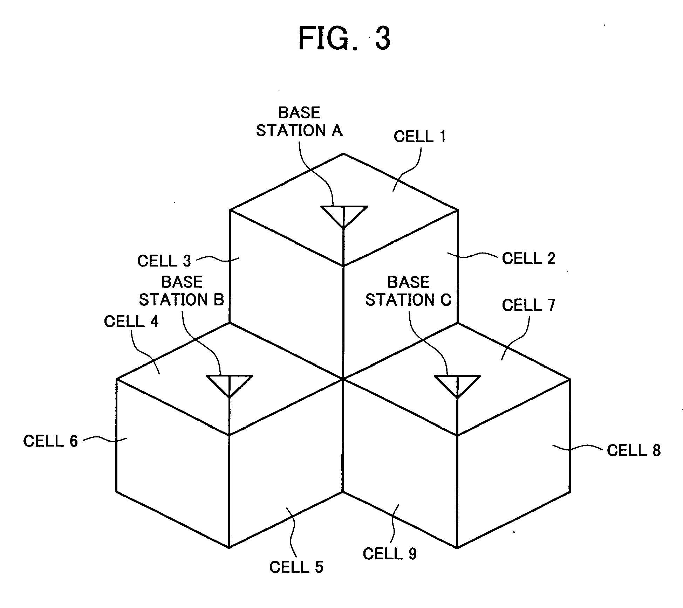

Here, detailed description will be given for the P-SCH in the present invention.
First, in an environment where a plurality of cells are arranged, a normal base station apparatus (e.g., base station A) which performs unicast transmission/reception with a mobile station apparatus performs control to a plurality of cells (cell 1, cell 2, and cell 3) as shown in Fig. 3. When a single base station apparatus performs control to three cells, it is possible to identify the base station apparatus (e.g., A) by the S-SCH and identify cells (cell 1, cell 2, and cell 3) controlled by the base station apparatus by the P-SCH. That is, three P-SCHs are considered to be allocated to the respective cells controlled by the same base station apparatus. The plurality of cells controlled by the same base station apparatus are also called a sector.

(S-SCH)

Next, description will be given for the S-SCH.

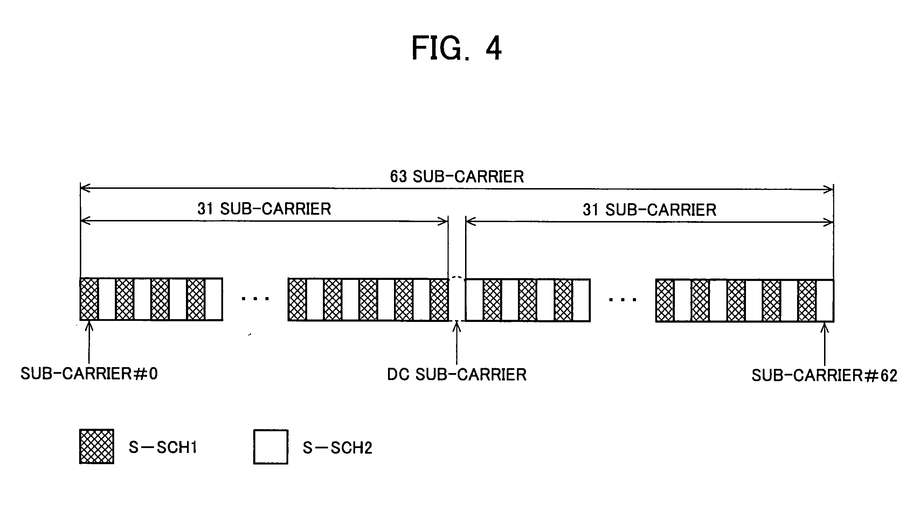

Fig. 4 shows an example of a signal sequence of the S-SCH and a channel structure (Non-patent document 5). A first S-SCH signal (S-SCH 1) and a second S-SCH signal (S-SCH 2) are prepared and one is selected from thirty-one pieces of sequences each of which is generated by performing cyclic shift for an M-sequence with a code length 31. Then, the S-SCH 1 and the S-SCH 2 are alternately arranged in sub-carriers except for the center DC (Direct Current) sub-carrier. No signal is arranged in the DC sub-carrier.

In the method shown in Fig. 4, 31 x 31 = 961 types of combinations are possible and the number of combinations which is enough to include information of the above-described base station apparatus is able to be obtained.

(Scrambling code)

Next, description will be given for a scrambling code multiplied by the S-SCH.

As a type of the scrambling code multiplied by the S-SCH, P-SCH-compliant scrambling codes are prepared. The P-SCH-compliant scrambling codes are scrambling codes determined, by identifying the P-SCH, as a unique or a plurality pieces of candidates in a group and each of which is multiplied by the S-SCH 1 and the S-SCH 2.

Alternatively, multiplying may be performed by the S-SCH 1 and the S-SCH 2 frequency-multiplexed alternately for every sub-carrier as shown in Fig. 4. As described above, in a normal cell, since there exist three sequences of the P-SCH, there exist three (or three groups of) P-SCH-compliant scrambling codes. As the code length of the scrambling codes to be multiplied, one which is equal to the length of the code length to be multiplied or which is adjusted to be equal to the code length to be multiplied is selected.

Scrambling codes determined, based on a sequence number used in the S-SCH 1, as a unique or a plurality pieces of candidates in a group, which are not used here, (hereinafter referred to as individual scrambling codes) are also able to be multiplied by the S-SCH 2. When there are n pieces of candidates as the S-SCH 1, n pieces (or n groups) of individual scrambling codes exist. As the code length to be multiplied, one which is equal to the code length of the S-SCH 2 or which is adjusted to be equal to the code length of the S-SCH 2 is selected.

Sequences which may be used as the above-described scrambling codes are considered to include a Hadamard sequence, a Walsh sequence, a Golay sequence, a PN sequence, an M sequence, a random sequence, and a GCL sequence.

In Non-patent document 6, proposed is a technology in which the S-SCH 1 and the S-SCH 2 is multiplied by the scrambling code and interference to the S-SCH signal from an adjacent cell is randomized. The method of Non-patent document 6 is a method for multiplying the S-SCH 1 and the S-SCH 2 by the scrambling code corresponding one-to-one to the P-SCH and further multiplying the S-SCH 2 by the individual scrambling codes corresponding to a sequence number used by the S-SCH 1.

[Non-patent document 4] 3GPP TS (Technical Specification) 36.211, Physical Channels and Modulation. V1.1.1 http://www.3gpp.org/ftp/Specs/html-info/36211.htm
[Non-patent document 5] Qualcomm Europe, "Details on SSC sequence design", R1-072727, 3GPP TSG RAN WG1#49bis, Orlando, USA, June 25-29, 2007
[Non-patent document 6] MCC Support, "Draft Report of 3GPP TSG RAN WG1 #49b v0.1.0", 3GPP TSG RAN WG1#49bis, Orlando, USA, June 25-29, 2007

(First embodiment)

Description will hereinafter be given for the first embodiment of the present invention.

In the present embodiment, one P-SCH having a different sequence from that of three P-SCHs allocated for a normal base station apparatus (hereinafter, referred to as a fourth P-SCH) is allocated for both an HNB and a dMBMS base station. Next, there are provided 340 types of S-SCHs for conveying a part of cell ID and frame timing information similarly to a normal cell. In this case, an S-SCH that is transmitted from the HNB is transmitted as it is while an S-SCH transmitted from the dMBMS base station is multiplied by -1 to be transmitted.

With the above-described processing, the mobile station apparatus recognizes that the HNB or the dMBMS base station exists by detecting the newly allocated fourth P-SCH, and performs propagation path compensation of an S-SCH by using the P-SCH as a reference signal of a phase and amplitude. By taking a correlation between the S-SCH subjected to the propagation path compensation and 340 types of sequences held in the mobile station apparatus in advance, a sequence in which an absolute value of a correlation value is maximum. Here, in the case of a plus correlation value, it is found that the signal is transmitted from the HNB, and in the case of a minus correlation value, it is found that the signal is transmitted from the dMBMS base station.

With the above processing, it is possible to perform a cell search without using a plurality of P-SCHs individually for the HNB and the dMBMS base station and seek to reduce processing in the mobile station apparatus.

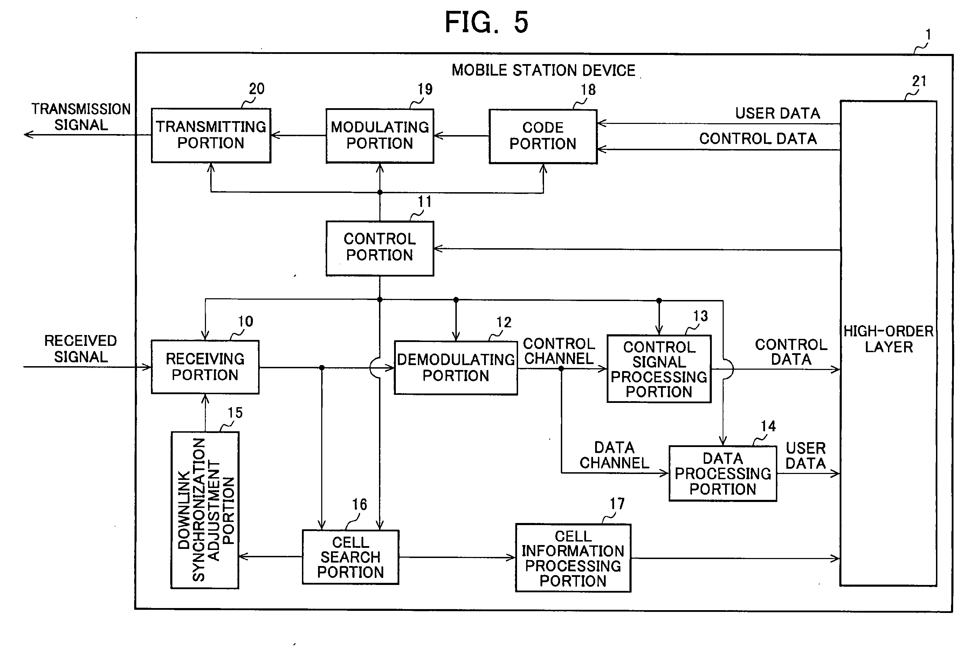

Fig. 5 is a block diagram showing an example of a configuration of a mobile station apparatus 1 according to the first embodiment of the present invention.

10 denotes a receiving portion for receiving a transmission signal from a base station apparatus. Note that, the above-described transmission signal received by a receiving portion 10 will hereinafter be referred to as a received signal. The receiving portion 10, based on an instruction from a control portion 11, if during a cell search procedure, outputs the received signal to a cell search portion 16.

In a cell search portion 16, when cell search procedure is at a step for taking slot synchronization (step S101 of Fig. 17), one sequence is detected from four P-SCH sequences and a step for obtaining slot timing is performed.

In addition, when the cell search procedure is at a step for obtaining cell information (step S102 of Fig. 17), an S-SCH is detected, and when the P-SCH has a normal cell sequence, cell information such as a cell ID group of a normal cell and frame timing is obtained, and as will be described below, in the case of the fourth P-SCH, plus and minus of a correlation value is judged, and in the case of being plus, a step for obtaining cell information such as ID information of the HNB and frame timing is performed, and in the case of being minus , a step for obtaining cell information such as ID information of the dMBMS base station and frame timing information is performed. The cell information here may include information which is different depending on a type of a cell (cell type), for example, information of the number of transmission antennas may be included only in the case of the normal cell, and not cell ID but a type of a broadcast signal that is transmitted may be indicated only in the case of the dMBMS.

The timing information (slot timing and frame timing) obtained by the P-SCH and the S-SCH is output to a downlink synchronization adjusting portion 15 to be used for adjusting signal reception timing of the receiving portion 10. In addition, the cell information obtained from the S-SCH is output to a cell information processing portion 17 and transferred to a high-order layer 21. Except for during cell search procedure, the received signal is sent to a demodulating portion 12 to be demodulated based on channel information or reception control information input from the control portion 11, and classified into a data channel and a control channel.

Each of the classified channels is output to a data processing portion 14 in the case of the data channel and to a control signal processing portion 13 in the case of the control channel. Note that, in the case of a channel other than the aboves, each of which is output to other channel control portions, which will be omitted because of not affecting the present invention. The data processing portion 14 takes out user data to output to the high-order layer 21. The control signal processing portion 13 takes out control data to output to the high-order layer 21.

The high-order layer 21 is comprised of the above-described processing of user data, application for generating user data and the like to be transmitted to the base station apparatus, and the like.

On the other hand, from the high-order layer 21, the user data and the control data are input to a code portion 18 to be encoded as transmission data. The control data includes an uplink reference signal and an uplink shared control channel data. In addition, channel information and transmission control information are input from the high-order layer 21 to the control portion 11. The transmission control information includes transmission/reception timing related to an uplink channel and a downlink channel, a multiplexing method, and modulation or demodulation information.

Each transmission data encoded by the code portion 18 is input to a modulating portion 19.

The modulating portion 19 performs modulation processing in an appropriate modulation system for the transmission data in accordance with information instructed by the control portion 11. The data modulated by the modulating portion 19 is input to the transmitting portion 20, subjected to appropriate power control, and transmitted. Note that, other components of the mobile station apparatus are not related to the present invention and therefore will be omitted. In addition, operations of each block are integrally controlled by the high-order layer 21.

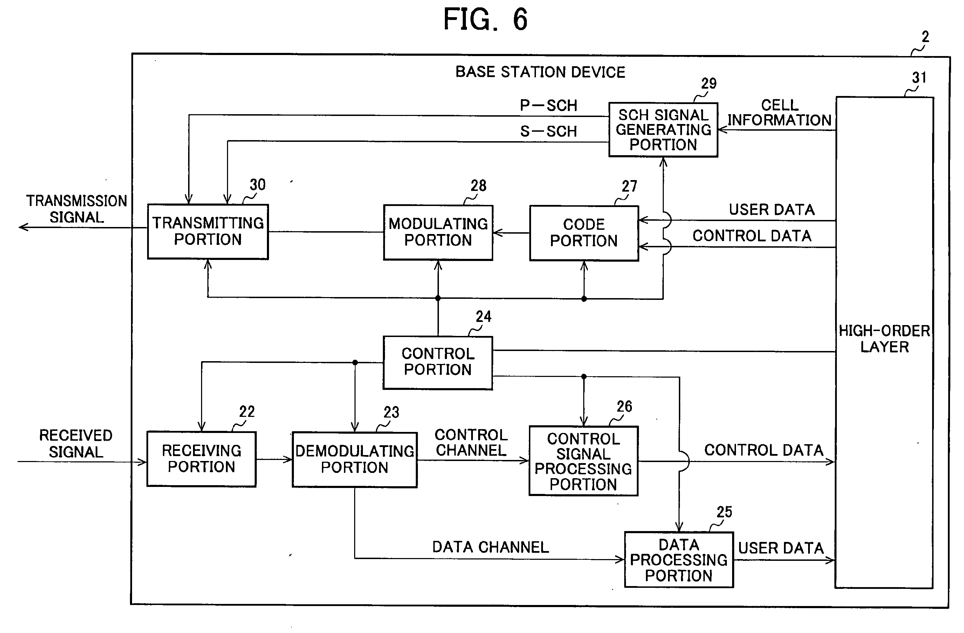

Fig. 6 is a block diagram showing an example of a configuration of a base station apparatus 2 according to the first embodiment of the present invention. Here, the base station apparatus 2 functions as a base station apparatus of a specific cell in a plurality of base station apparatuses (refer to Fig. 3).

22 denotes a receiving portion which receives a transmission signals from the mobile station apparatus and the base station apparatus. Note that, the above-described transmission signals received by the receiving portion 22 will hereinafter be referred to as received signals.

The above-described received signals are sent to a demodulating portion 23, classified into a data channel and a control channel based on control information instructed by a control portion 24, and demodulated respectively. Note that, in the case of a channel other than the aboves, each of which is output to other channel control portions, which will be omitted because of not affecting the present invention.

Each of the modulated data is output to a data processing portion 25 in the case of a data channel and to a control signal processing portion 26 in the case of a control channel.

The data processing portion 25 performs demodulation processing of user data to output to a high-order layer 31. The control signal processing portion 26 takes out control data to output to the high-order layer 31. In addition, control information related to control of scheduling is output to each block.

On the other hand, in the wake of a transmission request from the high-order layer 31, the user data and the control data are input to a code portion 27. The control data includes a broadcast information channel, a downlink reference signal, and a downlink shared control channel. In addition, the control information is input from the high-order layer 31 to the control portion 24.

The user data and the control data encoded by the code portion 27 are input to a modulating portion 28. The modulating portion 28 performs modulation processing in an appropriate modulation system as to each transmission data in accordance with the control information from the control portion 24. The data modulated by the modulating portion 28 is input to the transmitting portion 30 , subj ected to appropriate power control, and transmitted.

In addition, to an SCH signal generating portion 29, cell ID allocated for the base station apparatus, the number of transmission antennas, and frame timing when an SCH is transmitted are input as base station apparatus information from the high-order layer 31. The SCH signal generating portion 29 selects a combination of a P-SCH and an S-SCH corresponding to the base station apparatus information, and generates signals of the P-SCH and the S-SCH respectively. The generated P-SCH and S-SCH are input to the transmitting portion 30 and transmitted. Note that, other components of the mobile station apparatus are not related to the present invention and therefore will be omitted. In addition, operations of each block are integrally controlled by the high-order layer 31.

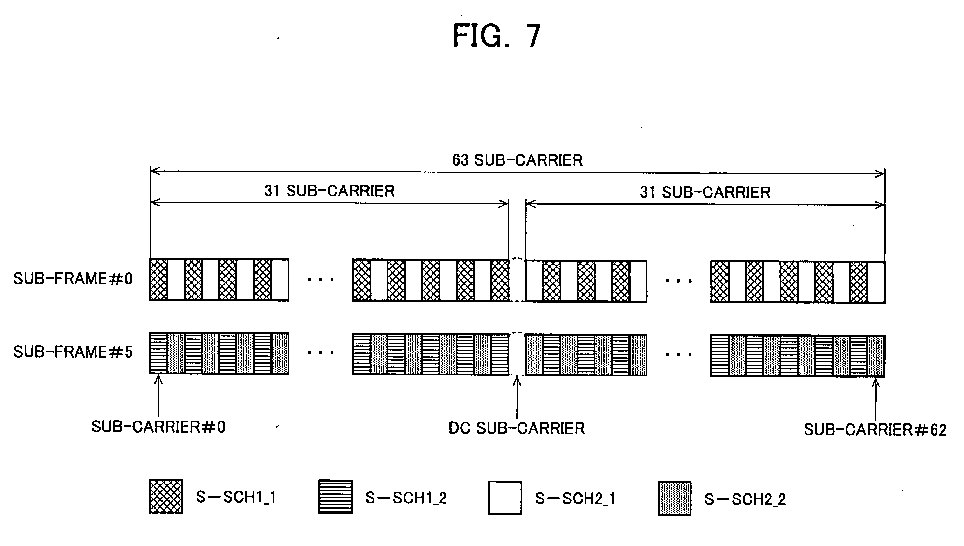

Fig. 7 is a diagram showing an example of a structure of an S-SCH in the first embodiment. The S-SCH is divided into an S-SCH 1 and an S-SCH 2. In addition, as to the S-SCH 1 and the S-SCH 2 here, it is assumed that an S-SCH 1 that is arranged in a sub-frame number #0 is an S-SCH_1, similarly, an S-SCH 2 is an S-SCH 2_1, an S-SCH 1 that is arranged in a sub-frame number #5 is an S-SCH 1_2, similarly, an S-SCH 2 is an S-SCH 2_2.

In Fig. 7, the S-SCH 1 and the S-SCH 2 are sequences of a code length 31, and are alternately arranged in sub-carriers except for the center DC sub-carrier. No signal is arranged in the DC sub-carrier. In addition, it is assumed that a sub-carrier number on the left end is a sub-carrier #0, and a sub-carrier number on the right end is a sub-carrier #62. In the present embodiment, four sequences (P1 to P4) are prepared as P-SCH-compliant scrambling codes and correlated uniquely to P-SCH sequences.

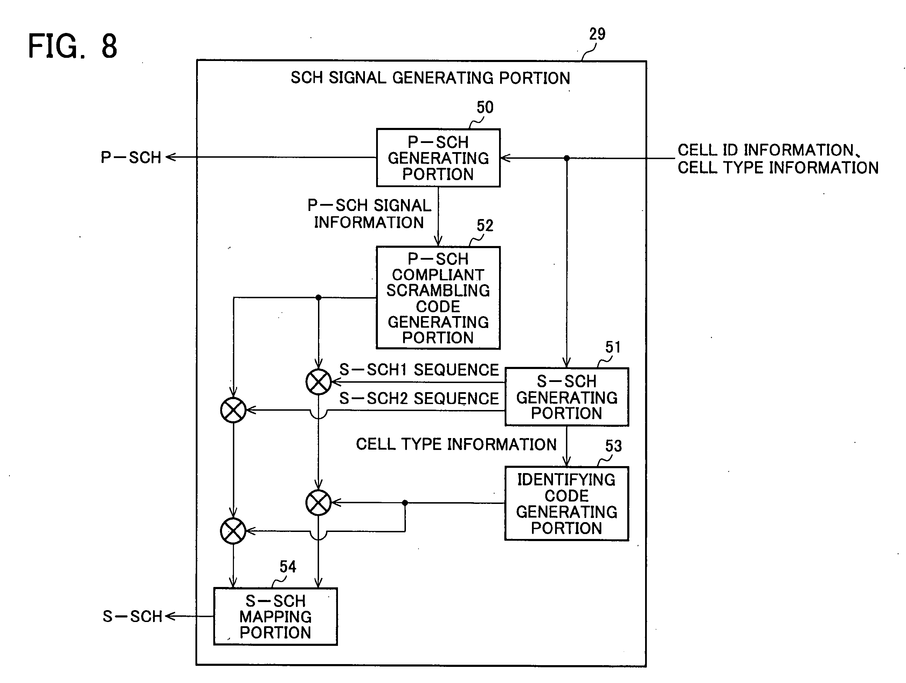

Fig. 8 is a block diagram for describing in detail an SCH signal generating portion 29 of the base station apparatus in the first embodiment.
The SCH signal generating portion 29 multiplies a secondary synchronization channel (S-SCH) by a sequence corresponding to a cell type.
As illustrated, cell ID information and cell type information (a normal cell, an HNB, a dMBMS, etc.,) are input to a P-SCH generating portion 50 and an S-SCH generating portion 51, and a P-SCH sequence is selected from the cell ID information and cell type information in the P-SCH generating portion 50. In addition, similarly, an S-SCH 1 and an S-SCH 2 are generated from the S-SCH generating portion 51 based on cell ID information and cell type information. Note that, the present embodiment shows an example where cell ID information and cell type information are input to the S-SCH generating portion 51, however, other base station apparatus information (for example, information of the number of transmission antennas and frame timing information) may be input.

Subsequently, to a P-SCH-compliant scrambling code generating portion 52, P-SCH sequence information selected from the P-SCH generating portion 50 (referred to as P-SCH signal information) is input, and a P-SCH-compliant scrambling code compliant with the P-SCH signal information, that is, a scrambling code associated with a cell type is generated.
Then, the P-SCH-compliant scrambling code output from the P-SCH-compliant scrambling code generating portion 52 is multiplied by the S-SCH 1 and the S-SCH 2 output from the S-SCH generating portion 51.

Further, when the above-described cell (cell type) is a cell of a dMBMS base station control, minus-1 is output from an identifying code generating portion 53, and the generated S-SCH 1 and S-SCH 2 are multiplied thereby. For the other types of cells, plus-1 may be output from the identifying code generating portion 53 to be multiplied, and it is of course possible that the identifying code generating portion 53 and a multiplying portion itself of a signal output from the identifying code generating portion 53 are not mounted.
That is, the identifying code generating portion 53 generates a plus-1 sequence and a minus-1 sequence to multiply an S-SCH signal.
As described above, out of scrambling codes associated with the above-described cell type, a scrambling code associated with a certain cell type is a code multiplying a scrambling code associated with another cell type by a binary code.

Finally, the S-SCH 1 and the S-SCH 2 to which the above-described scrambling by the P-SCH-compliant scrambling code and multiplication of an identifying code are performed, are input to an S-SCH mapping portion 54 and, frequency-multiplexed arranged in a sub-carrier position shown in Fig. 7. Note that, there is no problem even if an order of multiplication of each code is not necessarily in accordance with the present description. For example, a P-SCH-compliant scrambling code may be multiplied by an output signal from the identifying code generating portion.

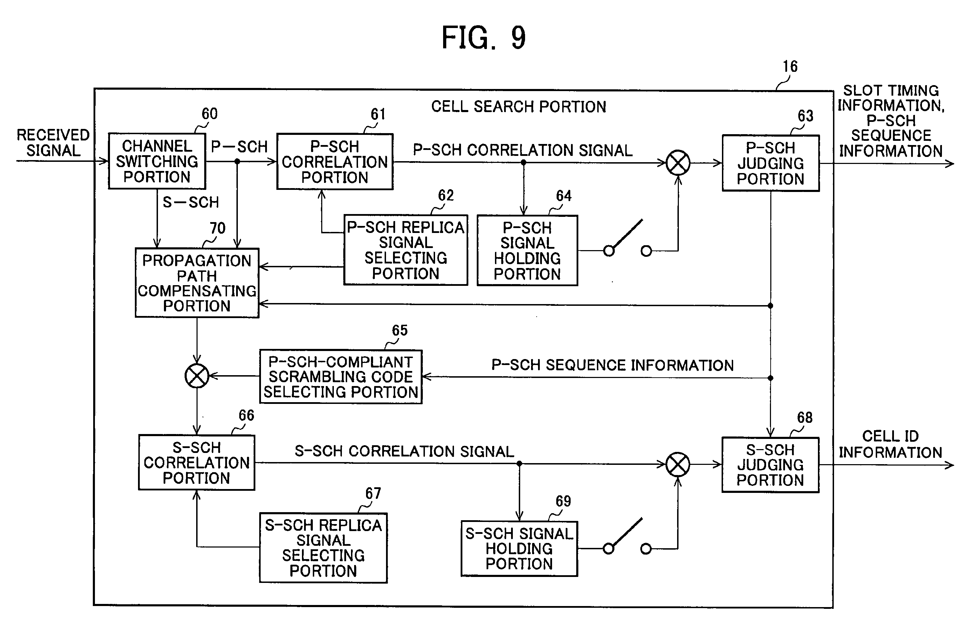

Fig. 9 is a block diagram for describing in detail a cell search portion 16 of the mobile station apparatus 1 in the first embodiment.
A received signal input from the receiving portion 10 is first input to a channel switching portion 60. The channel switching portion 60, in accordance with the above-described step of cell search control, judges whether being P-SCH detection processing or S-SCH detection processing, and appropriately changes an output destination of the received signal. In the case of the P-SCH detection processing, the received signal is input to a P-SCH correlation portion 61. In addition, to the P-SCH correlation portion 61, a P-SCH replica signal is input from a P-SCH replica signal selecting portion 62, and correlation wave detection processing with the received signal is performed.

A P-SCH correlation signal generated by correlation wave detection in the P-SCH correlation portion 61 is output to a P-SCH judging portion 63, and at the same time, the P-SCH correlation signal is output to a P-SCH signal holding portion 64, and the P-SCH correlation signal is stored. The stored correlation signal is synthesized with a P-SCH correlation signal newly input as necessary.

When a correlation value of the P-SCH correlation signal output from the P-SCH correlation portion 61 is at a certain level or more, the P-SCH judging portion 63 judges that the P-SCH is correctly detected, and the obtained P-SCH detection information (slot timing and P-SCH sequence information) is output to the cell information processing portion 17. In addition, at the same time, the P-SCH sequence information is input to a propagation path compensating portion 70, an S-SCH judging portion 68, and a P-SCH-compliant scrambling code selecting portion 65.

In the P-SCH-compliant scrambling code selecting portion 65, a P-SCH-compliant scrambling code corresponding to a P-SCH sequence is selected.

When cell search control is the S-SCH detection processing, in the propagation path compensating portion 70, a propagation path is estimated based on a P-SCH signal in the sub-frame same as that of the input S-SCH, P-SCH sequence information, and a P-SCH replica signal corresponding to the above-described P-SCH sequence information to compensate an S-SCH signal. The compensated received signal is multiplied by a P-SCH-compliant scrambling code. Although the propagation path compensating portion 70 is provided in this case, the propagation path compensating portion may not be provided if deterioration of performance is acceptable.

To an S-SCH correlation portion 66, an S-SCH replica signal is input from an S-SCH replica signal selecting portion 67, and correlation wave detection processing with a received signal is performed. An S-SCH correlation signal generated by correlation wave detection in the S-SCH correlation portion 66 is output to an S-SCH judging portion 68, and at the same time, the S-SCH correlation signal is output to an S-SCH signal holding portion 69, and the S-SCH correlation signal is stored.

That is, the S-SCH correlation portion 66 calculates a correlation value of the received S-SCH signal and the S-SCH replica held by its own station.

When an absolute value of a correlation value of the S-SCH correlation signal output from the S-SCH correlation portion 66 is at a certain level or more, the S-SCH judging portion 68 judges that an S-SCH 1 sequence is correctly detected, and further, when the input P-SCH information is the fourth P-SCH, judges plus and minus of the correlation value and outputs the obtained S-SCH detection information as cell ID information of any one of an HNB or a dMBMS that is judged, frame timing information, or the like, while in the case of a P-SCH other than the fourth P-SCH, outputs as normal cell ID information, frame timing information, or the like, to the cell information processing portion 17.

That is, the S-SCH judging portion 68 judges identification of a cell type according to a plus and minus signs of the calculated correlation value.

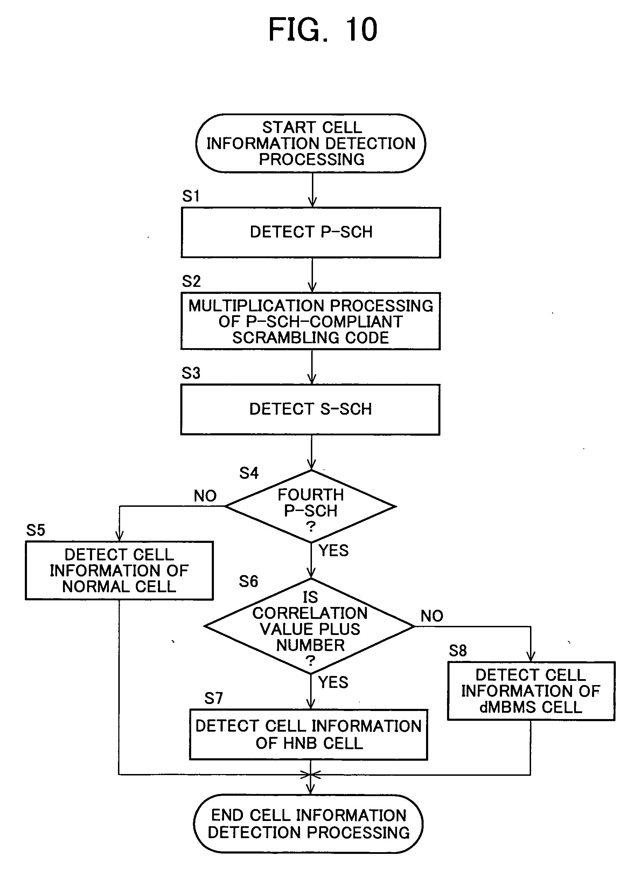

Fig. 10 is a flowchart for describing an example of processing up to identifying cell information of the cell search portion 16 in the mobile station apparatus 1 of Fig. 9.

After starting cell information detection processing, first, a correlation between a P-SCH replica held by its own station of the mobile station apparatus 1 and a received signal is taken, and it is assumed that a P-SCH is detected when the correlation exceeding a predetermined threshold is detected (step S1).

A received S-SCH signal is multiplied by a P-SCH-compliant scrambling code selected corresponding to an identified P-SCH sequence, and a descrambled signal is output (step S2).

A correlation between an S-SCH replica held by its own station of the mobile station apparatus 1 and the descrambled signal is taken to identify a sequence in which an absolute value of a correlation value is maximum, that is to detect an S-SCH (step S3).

Next, whether or not the P-SCH identified at S1 is the fourth P-SCH (P-SCH transmitted from an HNB and a dMBMS base station) is judged (step S4).

In the case of the fourth P-SCH (in the case of YES at step S4), the flow goes to step S6, and in the case of not (in the case of NO at step S4), the flow goes to step S5.

In the case of not the fourth P-SCH (in the case of NO at step S4), cell information of a normal cell is obtained from the S-SCH sequence identified at step S3 to end the cell information detection processing (step S5).

In the case of the fourth P-SCH (in the case of YES at step S4), whether a correlation value with the S-SCH sequence identified at step S3 is a plus value or a minus value is judged (step S6).

In the case of a plus value (in the case of YES at step S6), the flow goes to step S7 , while in the case of a minus value (in the case of NO at step S6), the flow goes to step S8.

In the case of a plus value (in the case of YES at step S6), cell information of the HNB is obtained from the S-SCH sequence identified at step S3 to end the cell information detection processing (step S7).

In the case of a minus value (in the case of NO at step S6), cell information of the dMBMS base station is obtained from the S-SCH sequence identified at step S3 to end the cell information detection processing (step S8).

According to the present embodiment, it is possible to correspond to synchronization to the HNB and the dMBMS base station only by adding the fourth P-SCH, without increasing a circuit scale required for detection processing of an S-SCH.

Note that, in the present embodiment, a cell type is identified such that plus is an HNB and minus is a dMBMS base station by judging plus and minus of a correlation of an S-SCH, however, plus and minus may become opposite if well-known in both the base station apparatus and the mobile station apparatus. In addition, cell types which are allocated to the fourth P-SCH, are not limited to these two, and also applicable to others such as a base station specialized for a specific use.

Further, it is possible to perform identification of a cell type without using the fourth P-SCH, by putting cell information of a normal cell on the first P-SCH out of three P-SCHs of a normal cell so that a correlation with the S-SCH is plus and putting cell information of an HNB so that a correlation therewith is minus, and also by putting cell information of a normal cell on the second P-SCH so that a correlation with an S-SCH is plus and putting cell information of a dMBMS so that a correlation therewith is minus.

(Second embodiment)

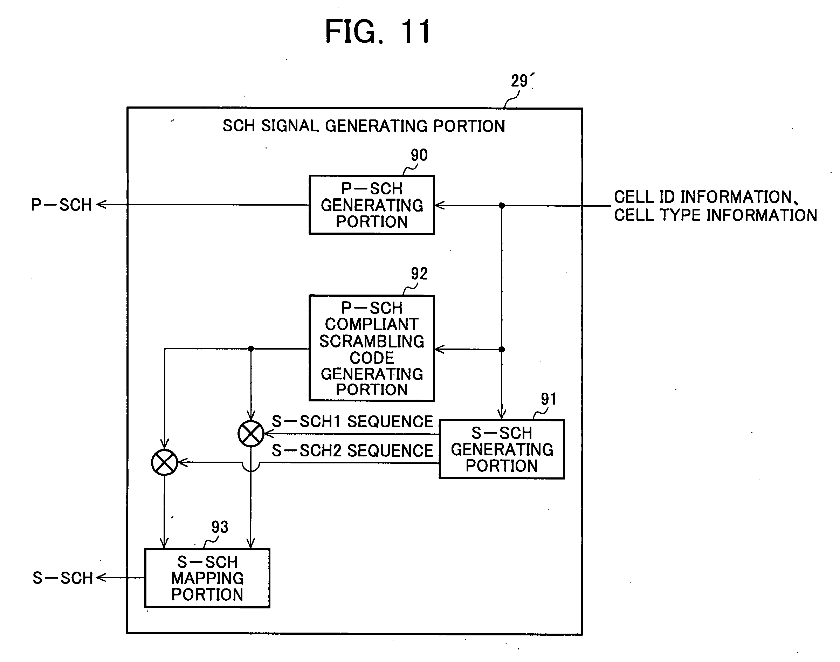

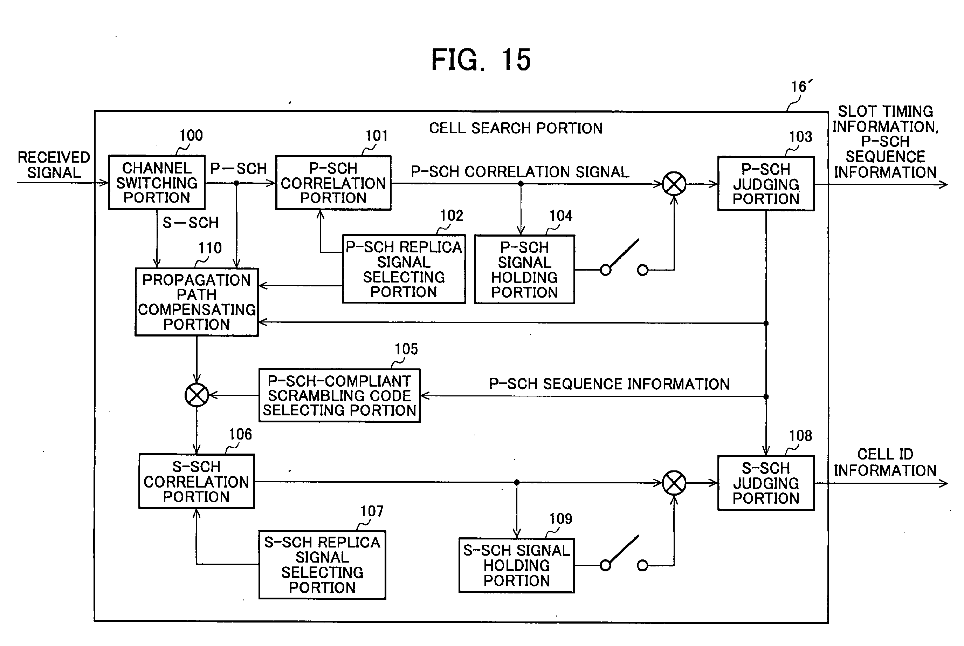

Next, description will be given for the second embodiment of the present invention. In the second embodiment, for identification of a cell type allocated to the fourth P-SCH, a method that is different from that of the first embodiment is used. Other than that the detail of the SCH signal generating portion 29 is changed to Fig. 11 of a configuration of the base station apparatus 2 and the detail of the cell search portion is changed to Fig. 15 of a configuration of the mobile station apparatus, the configuration may be same as those of Fig. 6 and Fig. 5. In addition, arrangement of an S-SCH may be same as that of Fig. 7.

Description will hereinafter be given for a P-SCH-compliant scrambling code generated in an SCH signal generating portion 29' of the base station apparatus 2 that will be shown in Fig. 11 below.

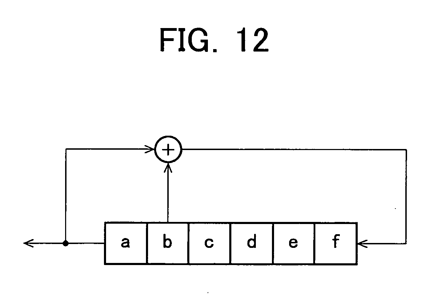

In the present embodiment, a PN sequence is used as a sequence to be used for the P-SCH-compliant scrambling code. Normally, the PN sequence is sequentially output by substituting an initial value other than (a, b, c, d, e, f) = (0, 0, 0, 0, 0, 0) into a generating circuit comprised of a shift register and exclusive OR as shown in Fig. 12. From the generating circuit shown in Fig. 12, a sequence making a circuit with a length 63 is able to be obtained. By performing a cyclic shift of the sequence of the length 63, sixty-three types of sequences are able to be generated.

In addition, also by substituting sixty-three types of (a, b, c, d, e, f) = (0, 0, 0, 0, 0, 1) to (1, 1, 1, 1, 1, 1) as an initial value of the shift register, sixty-three types of sequences of the length 63 are able to be obtained similarly.

(In addition, by changing the number of the shift registers and the position to perform exclusive OR, a sequence of a different length or type is able to be generated.)

One in which 0 in the sequence is set to be -1 is used as a sign.

Here, one representing n ($1 \le n \le 63$) by a 6-bit binary number is set to be (n1, n2, n3, n4, n5, n6). For example, when n = 7, (n1, n2, n3, n4, n5, n6) = (0, 0, 0, 1, 1, 1) is obtained.

Hereinafter, one in which 0 of the sequence that is obtained by substituting (a, b, c, d, e, f) = (n1, n2, n3, n4, n5, n6), is set to be minus-1 as an initial value of the above-described generating circuit, is set to a code P (n, m) (m = 1, 2, 3, ..., 63). An autocorrelation value of the code P (n) is 63, and a cross-correlation value is minus-1.

For example, assuming that four pieces (P(1, m), P(2, m), P(10, m), and P(19, m)) of codes of the above-described P(n, m) are used in the P-SCH-compliant scrambling, one type of code out of the above-described four types of codes is multiplied by the S-SCH to be transmitted from the base station for one cell. The mobile station apparatus performs descrambling processing by multiplying the received signal by one corresponding to the P-SCH detected from the four types of codes held in advance, performs correlation wave detection of the descrambled signal and the S-SCH sequences (e.g., 340 types), and calculates each correlation value. Of each correlation value, one having a maximum value or one exceeding a threshold set in advance is detected to identify the transmitted code.

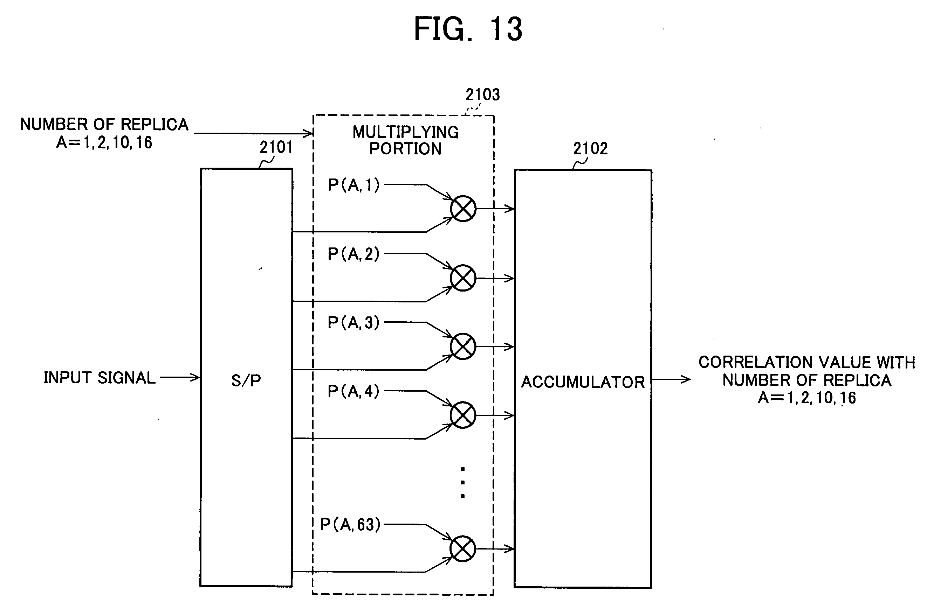

As shown in Fig. 13, an example of a correlation wave detector which detects the above-described correlation values is comprised of:

an S/P 2101 which converts an input signal of a length 63 into a parallel signal;
a multiplying portion 2103 which performs multiplication of the input signal converted into the parallel signal and a replica; and
an accumulator 2102 which accumulates each value multiplied by the multiplying portion 2103. Here, the multiplying portion 2103, when the replica has only binary of 1 and minus-1, may be substituted by inverting processing of a code bit (sign bit) of the input signal or the like.

Using the correlation wave detector of Fig. 13, the mobile station apparatus,

takes each correlation between the replicas of 340 types of S-SCH sequences held in its own station and the received signal to identify a code whose absolute value of the correlation value has the maximum value and a code in which the absolute value exceeds a threshold set in advance, as a code transmitted from the base station.

Here, the following formula is satisfied as to P (n, m) generated by using the generating circuit of Fig. 12.

```
<Formula 1>

P(19, m) x P(15, m) x (-1) = P(28, m)
```

This is one example, and there exist other combinations in which the same formula is satisfied. In addition, there exist other combinations in which the same formula is satisfied even in the case of changing the number of shift registers or the case of changing the position of exclusive OR.

Moreover, the following formula is satisfied according to the formula 1.

```
<Formula 2>

P(19, m) x P(19, m) = 1, 1, 1, 1, 1, 1, 1, …, 1

P(28, m) x P(19, m) = P(15, m) x (-1)
```

Here, when multiplying a signal Q1 x P(19, m) which multiplies 1 sequence Q1 of the S-SCH by P (19, m) as a scrambling code by P(19, m) and when multiplying a signal Q2 x P(28, m) which multiplies 1 sequence Q2 of the S-SCH (Q2 may be the same as or different from Q1) by P(28, m) as a scrambling code by P(19, m), the following formula is satisfied according to the formula 2.

```
<Formula 3>

Q1 x P(19, m) x P(19, m) = Q1

Q2 x P(28, m) x P(19, m) = Q2 x P(15, m) x (-1)
```

It will be shown below that it is possible to detect two types of codes, using the property of the above-described formulas, by preparing only a replica of P(19, m) without preparing a replica of P(28, m).

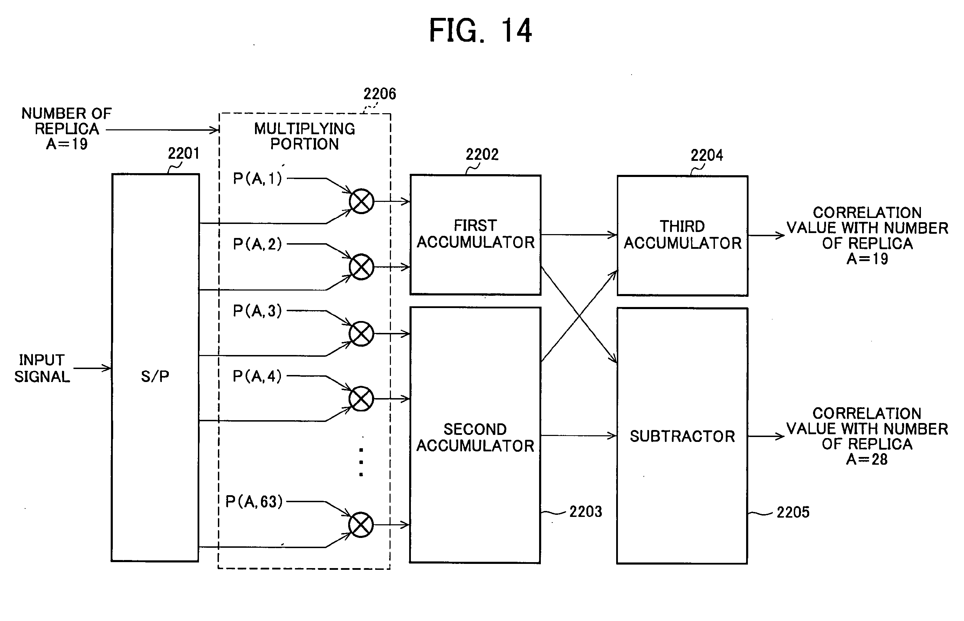

As shown in Fig. 14, the correlation wave detector for efficiently performing the above-described detection is comprised of:

an S/P 2201 which converts an input signal of the length 63 into a parallel signal;
a multiplying portion 2206 which performs multiplication of the input signal converted into the parallel signal and a replica;
a first accumulator 2202 which accumulates, of each value multiplied by the multiplying portion 2206, an output value of the multiplying portion 2206 corresponding to m in which a value of P(15, m) is minus-1;
a second accumulator 2203 which accumulates, of each value multiplied by the multiplying portion 2206, an output value of the multiplying portion 2206 corresponding to m in which a value of P(15, m) is plus-1;
a third accumulator 2204 which accumulates an output of the first accumulator 2202 and an output of the second accumulator 2203; and
a subtractor 2205 which subtracts an output of the second accumulator 2203 from an output of the first accumulator 2202.

Like the above-described circuit configuration, in accumulation of values output from the multiplying portion, it is possible to obtain a correlation value with a replica of P (19, m) by performing accumulation separating a point of m in which a value of P(15, m) is 1 and a point of m of being minus-1, and accumulating the both accumulation results, and it is possible to obtain a correlation value with a replica of P(28, m) by subtracting an accumulation result of the second accumulator 2203 from an accumulation result of the first accumulator 2202, which is equivalent processing to multiplying the right side of the above-described formula 2 by P(15, m) x (-1).

It is possible to obtain a correlation value to two scrambling codes only by adding an accumulator and a subtractor to 340 types of correlation wave detection processing for one scrambling code without performing 340 types of correlation wave detection processing for two scrambling codes respectively by using the above-described correlation wave detector, and to reduce calculation processing.

The above-described codes (e.g., P(19, m) and P(28, m)) are used as P-SCH-compliant scrambling codes in the fourth P-SCH, and P (19, m) is used when the base station is the HNB, and P (28, m) is used in the case of the dMBMS base station.

With the above-described processing, the mobile station apparatus recognizes that an HNB or a dMBMS base station exists by detecting the newly allocated fourth P-SCH, and performs propagation path compensation of an S-SCH by using the P-SCH as a reference signal of a phase and amplitude. Descrambling processing is performed by multiplying the S-SCH subjected to the propagation path compensation by P(19, m), and a sequence in which a correlation value is maximum is identified by taking a correlation with 340 types of sequences held in the mobile station apparatus in advance by the above-described correlation processing of Fig. 14. Here, it is found that a signal is transmitted from the HNB in the case of a correlation value with P (19, m), and it is found that a signal is transmitted from the dMBMS base station in the case of a correlation value with P (28, m).

With the above processing, it is possible to perform a cell search without using a plurality of P-SCHs individually for the HNB and the dMBMS base station and seek to reduce processing in the mobile station apparatus.

In the present embodiment, five sequences (P1 to P4 and P4') are prepared for the P-SCH-compliant scrambling codes and associated uniquely with the P-SCH sequences. Here, a sequence P4 is set to be P(19, m) and P4' is set to be P(28, m).

Here, description will be given in detail for the above-described SCH signal generating portion 29' of the base station apparatus in the second embodiment with reference to the block diagram of Fig. 11.

As illustrated, when cell ID information and cell type information (normal cell, HNB, dMBMS, etc.,) are input to a P-SCH generating portion 90, an S-SCH generating portion 91, and a P-SCH-compliant scrambling code generating portion 92, in the P-SCH generating portion 90, the P-SCH sequence is selected from the cell ID information and the cell type information.

In addition, similarly, the S-SCH 1 and the S-SCH 2 are generated from the S-SCH generating portion 91 based on cell ID information and cell type information. The present embodiment shows an example where cell ID information and cell type information are input to the S-SCH generating portion 91, however, other base station apparatus information (e.g., information of the number of transmission antennas, and frame timing information) may be input.

Subsequently, in the P-SCH-compliant scrambling code generating portion 92, the P-SCH-compliant scrambling code is generated base on cell ID information and cell type information. Specifically, when a cell type is a normal cell, the scrambling code is selected from P1, P2, and P3, when a cell type is an HNB, the above-described P4 is selected, and when a cell type is a dMBMS, the above-described P4' is selected.

Then, the P-SCH-compliant scrambling code output from the P-SCH-compliant scrambling code generating portion 92 is multiplied by the S-SCH 1 and the S-SCH 2 output from the S-SCH generating portion 91.

Finally, the S-SCH 1 and the S-SCH 2 to which scrambling by the above-described P-SCH-compliant scrambling code is applied are input to an S-SCH mapping portion 93 and frequency-multiplexed arranged at a sub-carrier position shown in Fig. 3.

Fig. 15 is a block diagram for describing a detail of a cell search portion 16' of the mobile station apparatus in the second embodiment.

As illustrated, the received signal input from the receiving portion 10 is first input to a channel switching portion 100. The channel switching portion 100, in accordance with a step of cell search control, judges whether being the P-SCH detection processing or the S-SCH detection processing, and changes an output destination of the received signal appropriately.

In the case of the P-SCH detection processing, the received signal is input to a P-SCH correlation portion 101. In addition, to the P-SCH correlation portion 101, the P-SCH replica signal is input from a P-SCH replica signal selecting portion 102 to perform correlation wave detection processing with the received signal.

The P-SCH correlation signal generated by correlation wave detection in the P-SCH correlation portion 101 is output to a P-SCH judging portion 103, and at the same time, the P-SCH correlation signal is output to the P-SCH signal holding portion 104, and the P-SCH correlation signal is stored. The stored correlation signal is synthesized with a P-SCH correlation signal newly input as necessary.

When a correlation value of the P-SCH correlation signal output from the P-SCH correlation portion 101 is at a certain level or more, the P-SCH judging portion 103 judges that a P-SCH is correctly detected, and the obtained P-SCH detection information (slot timing and P-SCH sequence information) is output to a cell information processing portion 17.

In addition, at the same time, the P-SCH sequence information is input to a propagation path compensating portion 110, an S-SCH judging portion 108, and a P-SCH-compliant scrambling code selecting portion 105. In the P-SCH-compliant scrambling code selecting portion 105, a P-SCH-compliant scrambling code corresponding to a P-SCH sequence is selected. Here, in the case of the fourth P-SCH, P4 is selected as a scrambling code.

When cell search control is the S-SCH detection processing, in the propagation path compensating portion 110, a propagation path is estimated based on a P-SCH signal in the sub-frame same as that of the input S-SCH, P-SCH sequence information, and a P-SCH replica signal corresponding to the above-described P-SCH sequence information to compensate an S-SCH signal. The compensated received signal is multiplied by a P-SCH-compliant scrambling code. Although the propagation path compensating portion 110 is provided in this case, the propagation path compensating portion may not be provided if deterioration of performance is acceptable. To an S-SCH correlation portion 106, an S-SCH replica signal is input from an S-SCH replica signal selecting portion 107, and correlation wave detection processing with a received signal is performed.

The S-SCH correlation portion 106 obtains a normal correlation value and a correlation value inverting plus and minus at a specific point when calculating a correlation value with an S-SCH replica held in its own station.

Here, when the detected P-SCH is the fourth P-SCH, correlation processing using the above-described P(15, m) is performed. When the S-SCH correlation signal generated by the correlation wave detection in the S-SCH correlation portion 106 and the P-SCH are the fourth P-SCHs, including whether the correlation result is P4 or P4', the output is performed to the S-SCH judging portion 108, and at the same time, the output is performed to the S-SCH signal holding portion 109 to be stored.

When an absolute value of a correlation value of the S-SCH correlation signal output from the S-SCH correlation portion 106 is at a certain level or more, the S-SCH judging portion 108 judges that the S-SCH 1 sequence is correctly detected, further performs judgment of whether the scrambling code is P4 or P4' when the input P-SCH information is the fourth P-SCH, outputs the obtained S-SCH detection information as cell ID information of any one of the HNB or the dMBMS being judged, frame timing information or the like, and in the case of the P-SCH other than the fourth P-SCH, outputs as normal cell ID information, frame timing information or the like, to the cell information processing portion 17. That is, the S-SCH judging portion 108 judges identification of a type of a cell according to the two types of calculated correlation values.

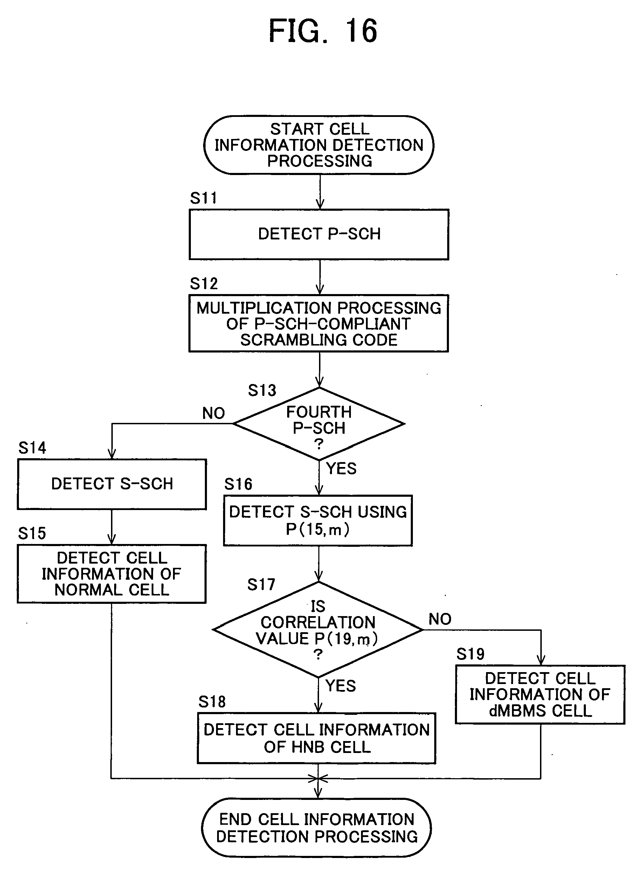

Fig. 16 is a flowchart for describing an example of processing up to identifying cell information of a cell search portion 16' in the mobile station apparatus of Fig. 11.

After starting cell information detection processing, first, a correlation is taken between the P-SCH replica held by its own station of the mobile station apparatus 1 and a received signal, and it is assumed that a P-SCH is detected when the correlation exceeding a predetermined threshold is detected (step S11).

The received S-SCH signal is multiplied by the P-SCH-compliant scrambling code selected corresponding to the identified P-SCH sequence, and the descrambled signal is output (step S12).

Whether or not the P-SCH identified at S11 is the fourth P-SCH (the P-SCH transmitted from the HNB and the dMBMS base station) is judged (step S13).

In the case of the fourth P-SCH (in the case of YES at step S13), the flow goes to step S16, and in the case of not (in the case of NO at step S13), the flow goes to step S14.

In the case of not the fourth P-SCH (in the case of NO at step S13), a correlation is taken between the S-SCH replica held by its own station of the mobile station apparatus 1 and the descrambled signal to identify a sequence in which the correlation value is maximum.

Then, cell information of a normal cell is obtained from the sequence identified at step S14 to end the cell information detection processing (step S15).

In the case of the fourth P-SCH (in the case of YES at step S13), a correlation is calculated between the S-SCH replica held by its own station of the mobile station apparatus 1 and the descrambled signal by the above-described method to identify a sequence in which the correlation value is maximum, and also to identify whether the calculated correlation value is for $P(19, m)$ or $P(28, m)$ (step S16).

Next, whether the correlation value of step S16 is for $P(19, m)$ is judged (step S17). When the correlation value of step S16 is for $P(19, m)$ (in the case of YES at step S17), the flow goes to step S18, and when being for $P(28, m)$ (in the case of NO at step S17), the flow goes to step S19.

In the case of $P(19, m)$ (in the case of YES at step S17), cell information of the HNB is obtained from the S-SCH sequence identified at step S16 to end the cell information detection processing (step S18).

In the case of $P(28, m)$ (in the case of NO at step S17), cell information of the dMBMS base station is obtained from the S-SCH sequence identified at step S16 to end the cell information detection processing (step S19).

According to the present embodiment, it is possible to correspond to synchronization to the HNB and the dMBMS base station without increasing the circuit scale required for detection processing of the S-SCH similarly to the first embodiment.

Note that, in the present embodiment, like the above-described step S17, a type of the cell of the HNB and the dMBMS base station is identified by judgment of the correlation value of the S-SCH, however, may be allocated oppositely if well-known in both the base station apparatus and the mobile station apparatus. In addition, cell types which are allocated to the fourth P-SCH, are not limited to these two, and also applicable to others such as a base station specialized for a specific use.

Further, without using the fourth P-SCH, and out of three P-SCHs of the normal cell, P1 and P1' which satisfy $P1 \times P1' = P(15,m) \times (-1)$ are used as scrambling codes corresponding to the first P-SCH, P1 is used as a scrambling code in the normal cell, and the first P-SCH is used as a P-SCH and P1' is used as a scrambling code in the HNB.

P2 and P2' which satisfy P2 x P2' = P(15,m) x (-1) are used as scrambling codes corresponding to the second P-SCH, P2 is used as a scrambling code in the normal cell, and the second P-SCH is used as a P-SCH and P2' is used as a scrambling code in the dMBMS.

When the mobile station apparatus detects the first P-SCH or the second P-SCH, it is also possible to perform identification of a cell type by the processing similarly to the case where the fourth P-SCH is used by performing the above correlation processing.

Description has been given taking a PN code as an example in the above-described first and second embodiments, however, not limited thereto, a code having the above-described property is applicable.

In addition, in the above-described first and second embodiments, cell ID information and cell type information are used as an example as a parameter to generate S-SCH 1 and S-SCH 2 sequences, however, only the cell ID information may be based on, or other frame timing information, antenna information, and the like may be included, not affecting the present invention.

Note that, in the above-described embodiments, control of the mobile station apparatus and the base station apparatus may be performed such that a program to realize functions of respective portions of the mobile station apparatus and the base station apparatus or a part of these functions is recorded in a computer-readable recording medium, causing a computer system to read the program recorded in the recording medium and execute. Note that, the "computer system" referred here is assumed to include a hardware such as an OS and peripheral devices.

In addition, the "computer-readable recording medium" means a storage device such as transportable medium including a flexible disc, a magneto-optical disc, a ROM, a CD-ROM, and a hard disc built in a computer system. Further, the "computer-readable recording medium" is assumed to include one which dynamically holds a program for a short time like a communication line in the case of transmitting a program through a network such as internet or a communication line such as a telephone line, and also, one which holds the program for a fixed time like a volatile memory inside a computer system serving as a server or a client in such case. Moreover, the above-described program may be one for realizing a part of the above-described functions, and further, may be one capable of realizing the above-described functions with a combination of a program already recorded in the computer system.

Detailed description has been given for the embodiments of the present invention with reference to figures, however, specific configuration is not limited to the embodiments, and a design and the like in the scope not departing from the gist of the present invention are also included in the scope of claims.

## Claims

1. Base station apparatuses in a multi-carrier communication system comprising one or a plurality of mobile station apparatus and a plurality of base station apparatuses, wherein
a primary synchronization channel (P-SCH) and a secondary synchronization channel (S-SCH) are transmitted as synchronization channels by the base station apparatuses,
a base station apparatus in a specific cell among the plurality of base station apparatuses is provided with an SCH signal generating portion which multiplies the secondary synchronization channel by a sequence corresponding to a type of the cell.

2. The base station apparatuses as defined in claim 1, wherein
the SCH signal generating portion which multiplies a sequence corresponding to a type of the cell is provided with an identifying code generating portion which generates a plus-1 sequence and a minus-1 sequence multiplied by an S-SCH signal.

3. The base station apparatuses as defined in claim 1, wherein
the SCH signal generating portion which multiplies a sequence corresponding to a type of the cell is provided with a P-SCH-compliant scrambling code generating portion which generates scrambling codes associated with a type of a cell.

4. The base station apparatuses as defined in claim 3, wherein
a scrambling code associated with a type of a certain cell among the scrambling codes associated with a type of the cell is a code obtained by multiplying a scrambling code associated with a type of a different cell by a binary code.

5. A mobile station apparatus which receives an S-SCH signal multiplied by a plus-1 sequence or a minus-1 sequence for identification of a type of a cell, wherein
an S-SCH correlation portion which calculates a correlation value of the received S-SCH signal and an S-SCH replica held in its own station and an S-SCH judging portion which judges identification of a type of a cell with plus and minus signs of the calculated correlation value are included.

6. A mobile station apparatus which performs identification of a type of a cell using a scrambling code multiplied by an S-SCH signal, wherein
an S-SCH correlation portion which obtains a normal correlation value and a correlation value inverting plus and minus at a specific point when calculating a correlation value of the received S-SCH signal and an S-SCH replica held in its own station and an S-SCH judging portion which judges identification of a type of a cell by the calculated two kinds of correlation values are included.

7. A communication system comprising the base station apparatuses as defined in any one of claims 1 to 4 and the mobile station apparatus as defined in claim 5 or 6.

8. A cell search method in a mobile station apparatus which executes a step of receiving an S-SCH signal multiplied by a plus-1 sequence or a minus-1 sequence for identification of a type of a cell, comprising:

a step of calculating a correlation value of the received S-SCH signal and an S-SCH replica held in its own station; and
a step of judging identification of a type of a cell with plus and minus signs of the calculated correlation value are included.

9. A cell search method in a mobile station apparatus which executes a step of performing identification of a type of a cell using a scrambling code multiplied by an S-SCH signal, wherein
a step of obtaining a normal correlation value and a correlation value inverting plus and minus at a specific point when calculating a correlation value of the received S-SCH signal and an S-SCH replica held in its own station and a step of judging identification of a type of a cell by the calculated two kinds of correlation values are included.

# FIG. 1

EP 2 209 242 A1

# FIG. 2

EP 2 209 242 A1

# FIG. 3

# FIG. 4

EP 2 209 242 A1

63 SUB-CARRIER

31 SUB-CARRIER

31 SUB-CARRIER

SUB-CARRIER#0

DC SUB-CARRIER

SUB-CARRIER#62

S—SCH1

S—SCH2

FIG. 5

# FIG. 6

BASE STATION DEVICE — 2

- P–SCH
- S–SCH
- SCH SIGNAL GENERATING PORTION — 29
- CELL INFORMATION
- HIGH-ORDER LAYER — 31
- TRANSMISSION SIGNAL
- TRANSMITTING PORTION — 30
- MODULATING PORTION — 28
- CODE PORTION — 27
- USER DATA
- CONTROL DATA
- CONTROL PORTION — 24
- RECEIVED SIGNAL
- RECEIVING PORTION — 22
- DEMODULATING PORTION — 23
- CONTROL CHANNEL
- CONTROL SIGNAL PROCESSING PORTION — 26
- CONTROL DATA
- DATA CHANNEL
- DATA PROCESSING PORTION — 25
- USER DATA

EP 2 209 242 A1

# FIG. 7

EP 2 209 242 A1

63 SUB-CARRIER

31 SUB-CARRIER                    31 SUB-CARRIER

SUB-FRAME#0

SUB-FRAME#5

SUB-CARRIER#0                DC SUB-CARRIER                SUB-CARRIER#62

S—SCH1_1        S—SCH1_2        S—SCH2_1        S—SCH2_2

# FIG. 8

SCH SIGNAL GENERATING PORTION                                    29

P-SCH ←                          P-SCH
                                 GENERATING          ← CELL ID INFORMATION,
                                 PORTION               CELL TYPE INFORMATION
                                    50

                    P-SCH SIGNAL
                    INFORMATION
                                      52
                                 P-SCH
                                 COMPLIANT
                                 SCRAMBLING
                                 CODE
                                 GENERATING
                                 PORTION

                         S-SCH1 SEQUENCE          51
                    ⊗                      S-SCH
                         S-SCH2 SEQUENCE   GENERATING
                    ⊗                      PORTION

                    CELL TYPE INFORMATION           53

                                           IDENTIFYING
                    ⊗                      CODE
                                           GENERATING
                    ⊗                      PORTION

                         54
S-SCH ←             S-SCH
                    MAPPING
                    PORTION

EP 2 209 242 A1

# FIG. 9

CELL SEARCH PORTION 16

RECEIVED SIGNAL → CHANNEL SWITCHING PORTION 60

P—SCH → P-SCH CORRELATION PORTION 61 → P-SCH CORRELATION SIGNAL → P-SCH JUDGING PORTION 63 → SLOT TIMING INFORMATION, P-SCH SEQUENCE INFORMATION

S—SCH

P-SCH REPLICA SIGNAL SELECTING PORTION 62

P-SCH SIGNAL HOLDING PORTION 64

PROPAGATION PATH COMPENSATING PORTION 70

P-SCH-COMPLIANT SCRAMBLING CODE SELECTING PORTION 65

P-SCH SEQUENCE INFORMATION

S-SCH CORRELATION PORTION 66 → S-SCH CORRELATION SIGNAL → S-SCH JUDGING PORTION 68 → CELL ID INFORMATION

S-SCH REPLICA SIGNAL SELECTING PORTION 67

S-SCH SIGNAL HOLDING PORTION 69

EP 2 209 242 A1

# FIG. 10

```
        ┌─────────────────────────┐
        │     START CELL          │
        │ INFORMATION DETECTION   │
        │     PROCESSING          │
        └───────────┬─────────────┘
                    │
   S1               ▼
        ┌─────────────────────────┐
        │     DETECT P-SCH         │
        └───────────┬─────────────┘
                    │
   S2               ▼
        ┌─────────────────────────┐
        │ MULTIPLICATION PROCESSING│
        │   OF P-SCH-COMPLIANT     │
        │    SCRAMBLING CODE       │
        └───────────┬─────────────┘
                    │
   S3               ▼
        ┌─────────────────────────┐
        │     DETECT S-SCH         │
        └───────────┬─────────────┘
                    │
              S4    ▼
         NO    ╱ FOURTH ╲
      ◄────────   P-SCH
                  ╲   ?  ╱
   S5                │ YES
 ┌──────────────┐    ▼
 │ DETECT CELL  │  S6
 │INFORMATION OF│   ╱   IS    ╲      NO
 │ NORMAL CELL  │  ╱CORRELATION╲ ──────────►
 └──────┬───────┘  ╲VALUE PLUS ╱
                    ╲ NUMBER  ╱         S8
                      ╲  ?  ╱    ┌──────────────┐
                        │ YES   │ DETECT CELL   │
                   S7   ▼       │INFORMATION OF │
              ┌─────────────────┐│  dMBMS CELL  │
              │DETECT CELL INFO- │└──────┬───────┘
              │MATION OF HNB CELL│       │
              └────────┬─────────┘       │
                       │                 │
                       ▼                 
        ┌─────────────────────────┐
        │  END CELL INFORMATION    │
        │ DETECTION PROCESSING     │
        └─────────────────────────┘
```

25

# FIG. 11

SCH SIGNAL GENERATING PORTION 29´

P—SCH GENERATING PORTION 90

P—SCH COMPLIANT SCRAMBLING CODE GENERATING PORTION 92

S—SCH GENERATING PORTION 91

S—SCH MAPPING PORTION 93

CELL ID INFORMATION, CELL TYPE INFORMATION

S—SCH1 SEQUENCE

S—SCH2 SEQUENCE

P—SCH

S—SCH

EP 2 209 242 A1

# FIG. 12

# FIG. 13

NUMBER OF REPLICA A=1,2,10,16

MULTIPLYING PORTION  2103

2101

2102

INPUT SIGNAL → S/P

P(A,1)

P(A,2)

P(A,3)

P(A,4)

P(A,63)

ACCUMULATOR

CORRELATION VALUE WITH NUMBER OF REPLICA A=1,2,10,16

EP 2 209 242 A1

## FIG. 14

NUMBER OF
REPLICA
A=19

2206

MULTIPLYING
PORTION

2201

INPUT
SIGNAL → S/P

P(A,1)

P(A,2)

P(A,3)

P(A,4)

P(A,63)

2202

FIRST
ACCUMULATOR

2204

THIRD
ACCUMULATOR

→ CORRELATION
VALUE WITH NUMBER
OF REPLICA
A=19

2203

SECOND
ACCUMULATOR

2205

SUBTRACTOR

→ CORRELATION
VALUE WITH NUMBER
OF REPLICA
A=28

EP 2 209 242 A1

# FIG. 15

CELL SEARCH PORTION

RECEIVED SIGNAL →

100 CHANNEL SWITCHING PORTION

P—SCH →

101 P-SCH CORRELATION PORTION

P-SCH CORRELATION SIGNAL

103 P-SCH JUDGING PORTION

SLOT TIMING INFORMATION, P-SCH SEQUENCE INFORMATION →

S—SCH ↓

110 PROPAGATION PATH COMPENSATING PORTION

102 P-SCH REPLICA SIGNAL SELECTING PORTION

104 P-SCH SIGNAL HOLDING PORTION

105 P-SCH-COMPLIANT SCRAMBLING CODE SELECTING PORTION

P-SCH SEQUENCE INFORMATION

106 S-SCH CORRELATION PORTION

107 S-SCH REPLICA SIGNAL SELECTING PORTION

109 S-SCH SIGNAL HOLDING PORTION

108 S-SCH JUDGING PORTION

CELL ID INFORMATION →

16'

EP 2 209 242 A1

# FIG. 16

START CELL INFORMATION DETECTION PROCESSING

S11 DETECT P-SCH

S12 MULTIPLICATION PROCESSING OF P-SCH-COMPLIANT SCRAMBLING CODE

S13 FOURTH P-SCH ?

NO → S14 DETECT S-SCH

S15 DETECT CELL INFORMATION OF NORMAL CELL

YES → S16 DETECT S-SCH USING $P(15,m)$

S17 IS CORRELATION VALUE $P(19,m)$ ?

NO → S19 DETECT CELL INFORMATION OF dMBMS CELL

YES → S18 DETECT CELL INFORMATION OF HNB CELL

END CELL INFORMATION DETECTION PROCESSING

# FIG. 17

```
        ┌─────────────────────┐
        │       START         │
        │   W-CDMA SYSTEM      │
        │    CELL SEARCH       │
        └─────────────────────┘
                  │
        ┌─────────────────────┐
        │  P-SCH IDENTIFICATION │
   S101 │     PROCESSING      │
        ├─────────────────────┤
        │  OBTAIN SLOT TIMING  │
        └─────────────────────┘
                  │
        ┌─────────────────────┐
        │  S-SCH IDENTIFICATION │
   S102 │     PROCESSING      │
        ├─────────────────────┤
        │ OBTAIN FRAME TIMING AND│
        │    CELL ID GROUP     │
        └─────────────────────┘
                  │
        ┌─────────────────────┐
        │   COMMON PILOT      │
   S103 │ IDENTIFICATION PROCESSING │
        ├─────────────────────┤
        │   OBTAIN CELL ID    │
        └─────────────────────┘
                  │
        ┌─────────────────────┐
        │        END          │
        │   W-CDMA SYSTEM      │
        │    CELL SEARCH       │
        └─────────────────────┘
```

## INTERNATIONAL SEARCH REPORT

| | International application No. |
|---|---|
| | PCT/JP2008/066943 |

A. CLASSIFICATION OF SUBJECT MATTER
*H04J11/00(2006.01)i, H04J1/00(2006.01)n*

According to International Patent Classification (IPC) or to both national classification and IPC

B. FIELDS SEARCHED

Minimum documentation searched (classification system followed by classification symbols)
H04J11/00, H04J1/00

Documentation searched other than minimum documentation to the extent that such documents are included in the fields searched
Jitsuyo Shinan Koho          1922-1996    Jitsuyo Shinan Toroku Koho    1996-2008
Kokai Jitsuyo Shinan Koho    1971-2008    Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2008-141741 A (Motorola, Inc.), 19 June, 2008 (19.06.08), Par. Nos. [0053] to [0071]; Figs. 9, 10, 12 & WO 2008/057752 A2     & WO 2008/057752 A3 | 1-9 |
| A | Sharp, Comparison of P-SCH and S-SCH sequence design options, 3GPP TSG RAN WG1 Meeting #49, R1-072049, 2007.05 | 1-9 |
| A | Sharp, Proposed Scrambling sequences for S-SCH, 3GPP TSG RAN WG1 Meeting #50, R1-073323, 2007.08, pp.1-12 | 1-9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 December, 2008 (12.12.08) | 22 December, 2008 (22.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/066943

C (Continuation).　DOCUMENTS CONSIDERED TO BE RELEVANT

| Category* | Citation of document, with indication, where appropriate, of the relevant passages | Relevant to claim No. |
|---|---|---|
| A | WO 2004/049618 A1 (Korea Electronics and Telecommunications Research Institute), 10 June, 2004 (10.06.04), Full text; all drawings & KR 2004045996 A     & AU 2002356462 A1 & EP 1566007 A1     & KR 479864 B & US 2006/0114812 A1 | 1-9 |
| A | WO 2006/068023 A1 (Matsushita Electric Industrial Co., Ltd.), 29 June, 2006 (29.06.06), Full text; all drawings & EP 1806861 A1     & CN 101073215 A | 1-9 |
| A | JP 2004-159304 A (NTT Docomo Inc.), 03 June, 2004 (03.06.04), Par. Nos. [0010], [0047] & EP 1411741 A1     & CN 1498017 A & US 2005/0037798 A1 | 1-9 |
| P,A | WO 2008/081535 A1 (Fujitsu Ltd.), 10 July, 2008 (10.07.08), Fig. 9 (Family: none) | 1-9 |
| P,A | WO 2007/145357 A1 (Sharp Corp.), 21 December, 2007 (21.12.07), Fig. 11 (Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Keiji TACHIKAWA.** W-CDMA mobile communication system. MARUZEN CO., Ltd, 25 June 2001
- **NTT DoCoMo.** Cell ID Assignment for Home Node B. *R1-073684, 3GPP TSG RAN WG1#50,* 20 August 2007
- **Nokia.** Transmission of P-BCH, P-SCH and S-SCH on dedicated MBMS carrier. *R1-073668, 3GPP TSG RAN WG1#50,* 20 August 2007